# EUROPEAN PATENT APPLICATION

(11) **EP 0 967 460 A1**
(43) Date of publication of application: **29.12.1999**
(21) Application number: 99302222.7
(22) Date of filing: 23.03.1999
(51) Int. Cl.: G01C 21/20

(54) **Vehicle navigation system**

(30) Priority: 25.06.1998 US 104882
(71) Applicant: Visteon Technologies, LLC, Dearborn, MI 48126 (US)
(72) Inventor: Oshizawa, Hideakazu, Cupertino, California 95014 (US); Taniguchi, Noboru, San Jose, California 95129 (US)
(74) Representative: Wombwell, Francis

(57) **Abstract**

An on-board automobile navigation system provides advisory information to the driver based on real-time traffic information and a learned commute route. The system empirically determines a commute route based on historical travel data of the vehicle. The system further receives real-time traffic information via a wireless link. The real-time traffic information may include information relating to traffic accidents, construction, and other traffic problems and the locations of such problems. At power up, the system automatically determines whether the present day and time are within a previously defined commute time window and, if so, prompts the driver to accept or decline a previously defined commute destination. The system automatically receives the real-time traffic information and compares the location information associated with any traffic problems to the commute route. If the system determines that the location of a traffic problem falls on or near the commute route, then the system outputs an appropriate notification to the user and, if possible, computes an alternative route.

## Description

### FIELD OF THE INVENTION

The present invention pertains to automobile navigation systems. More particularly, the present invention relates to a technique for providing traffic advisory information to the driver of an automobile.

### BACKGROUND OF THE INVENTION

Current automobile navigation technology includes on-board navigation systems designed to assist the driver of an automobile in reaching a desired destination. One exemplary on-board automobile navigation system allows the driver to input a destination, computes a best route to the destination based on a stored street map database, and then provides step-by-step instructions as the vehicle travels to guide the driver to the destination. The instructions may be given in the form of text, graphics, recorded or synthesized speech, or a combination thereof. The system may also provide the driver with a visual street map display based on the stored map database and indicate the position and movement of the vehicle as the vehicle travels. The navigation system may use well-known techniques to determine the position of the vehicle as the vehicle travels, such as dead-reckoning in combination with map matching, which may also be used in conjunction with a precise positioning system, such as Global Positioning System (GPS) or the like. On-board navigation systems having these features are available from Zexel Innovation of Sunnyvale, California.

On-board automobile navigation systems are useful for navigation in unfamiliar areas. However, drivers may encounter navigation problems even in familiar territory, which current navigation systems are not designed to handle. For example, many people drive one particular route every day, such as when commuting to work or school. Such commuters may unexpectedly encounter various traffic problems along their commute route, such as traffic accidents, construction, etc., which delay their commutes. Although traffic reports are commonly broadcast by radio and television stations during commute hours, such reports are not broadcast continuously. Consequently, important traffic information may not reach the commuter until it is too late for him to identify and take an alternate route. Further, the commuter may be in a hurry and may not wish to set up his on-board navigation system to compute an alternate route.

Technology has been developed for embedding continuously-broadcast, real-time traffic data within FM radio signals. However, even the availability of real-time traffic information may not be adequate to inform a commuter of a traffic problem that affects his commute route. For example, traffic problems often impact an area well beyond the immediate vicinity of the problem. Further, the commuter may be unfamiliar with streets that are not located on, but are close to, his commute route. Consequently, the commuter may not realize that a traffic problem affects his or her commute route, even with the benefit of real-time traffic information. Therefore, what is needed is an on-board automobile navigation system which overcomes these and other disadvantages of the prior art.

### SUMMARY OF THE INVENTION

A technique for providing advisory information to the driver of a vehicle is provided. A route is determined empirically based on historical travel data of the vehicle. Real-time traffic information is then received and referenced against the route. A notification is output to the driver if there is a correspondence between the real-time traffic information and the route. Other features of the present invention will be apparent from the accompanying drawings and from the detailed description which follows.

### BRIEF DESCRIPTION OF THE DRAWINGS

The present invention is illustrated by way of example and not limitation in the figures of the accompanying drawings, in which like references indicate similar elements and in which:
Figure 1 is a block diagram illustrating an on-board automobile navigation system receiving real-time traffic information from a remote transmission source.
Figure 2 is a block diagram of an on-board automobile navigation system.
Figure 3 is a flow diagram illustrating an overall routine for providing advisory information to a driver based on real-time traffic information and a learned commute route.
Figure 4 is a flow diagram illustrating a routine by which an on-board navigation system learns a commute route.
Figure 5 is a flow diagram illustrating another embodiment of a routine by which an on-board navigation system learns a commute route.

### DETAILED DESCRIPTION

An on-board automobile navigation system that provides traffic advisory information to a driver based on real-time traffic information and a learned commute route is described. As will be described in greater detail below, the navigation system learns a commute route used by a driver of an automobile empirically, i.e., based on acquired historical travel data of the automobile. More specifically, the navigation system stores information on the routes traveled by the automobile over a period of time and determines a commute route based on this information. The system then compares the commute route to traffic advisories received in real-time traffic information and notifies the driver if there is a traffic incident on or near his commute route.

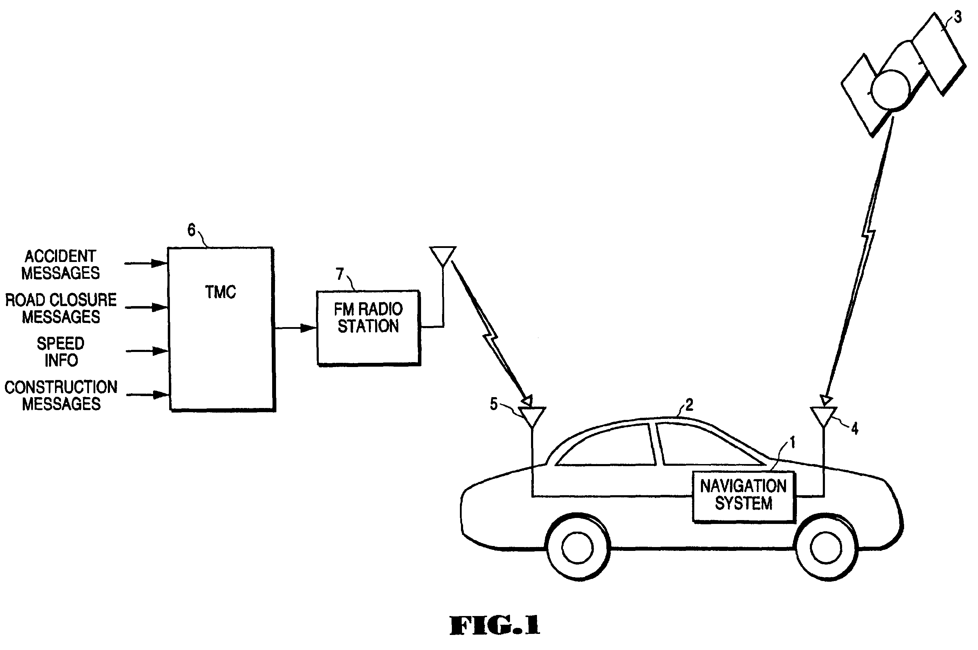

Referring now to Figure 1, an onboard automobile navigation system 1 is installed in an automobile 2. The navigation system 1 performs guidance functions for guiding the driver of the automobile 2 to a selected destination, such as the functions described above (see "BACKGROUND OF THE INVENTION"). The navigation system 1 includes a first antenna 4 for communicating with a GPS satellite 3, and a second antenna 5 for receiving real-time traffic information (RTI) messages from a remote transmission source.

The RTI messages are created by a traffic management center (TMC) 6, which receives traffic information from a variety of sources. The traffic information may include, for example, accident messages, road closure messages, speed information relating to various sections of roadway, and construction messages. The sources of such data may be, for example, loop detectors, automatic vehicle identification tags, historical traffic analysis, and theoretical information about traffic capacity to determine the level of traffic congestion. The TMC 6 may also generate RTI messages based upon incident information it receives from police, fire, or highway departments. The TMC 6 consolidates the data it receives and converts the data into RTI messages having a standard format. The TMC 6 then transmits the RTI messages to a local radio station 7 over any suitable data communication link, such as conventional (POTS) telephone lines, ISDN lines, T1 lines, etc.

The local radio station 7 reserves a section of its frequency modulation (FM) transmission spectrum for the broadcasting of the RTI messages. The radio station 7, therefore, broadcast the RTI messages in the reserved portion of its FM transmission spectrum. The broadcast RTI messages are received and decoded by the on-board navigation system 1 in the automobile 2. Note that techniques are known to those skilled in the art for generating and transmitting RTI messages and for receiving and decoding such messages. The RTI messages include location coordinates (e.g., latitude and longitude) of traffic incidents. Accordingly, the navigation system 1 compares the location information in the RTI messages with the commute route, and, if there is a substantial match, outputs an appropriate advisory to the driver.

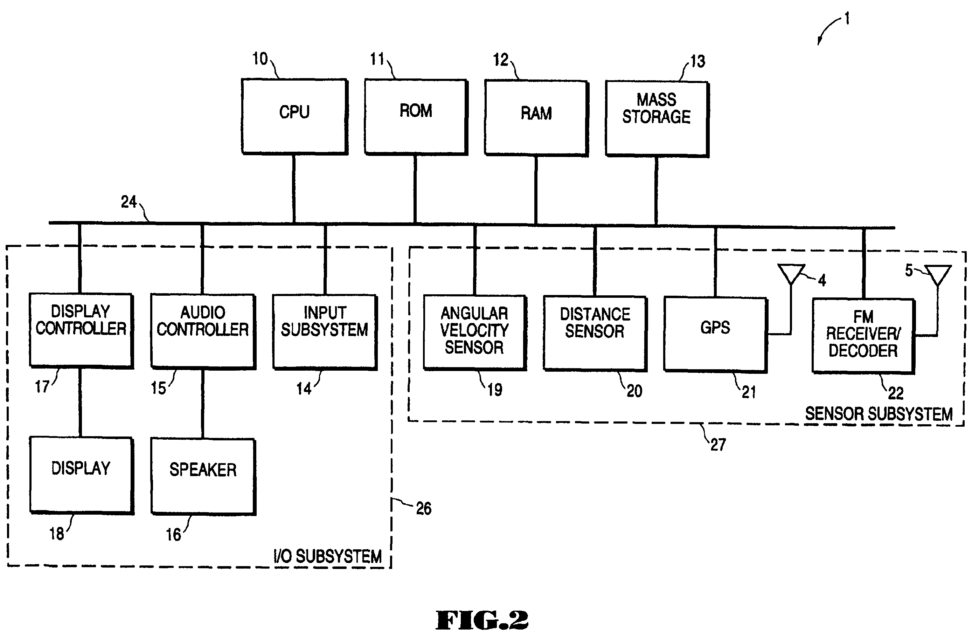

Figure 2 illustrates an embodiment of the navigation system 1. As shown, the navigation system 1 includes a central processing unit (CPU) 10, read-only memory (ROM) 11, random access memory (RAM) 12, and a mass storage device 13, coupled together by a bus system 24. The bus system 24 may represent multiple buses, which may be interconnected by various bridges, bus controllers, and/or adapters. The CPU 10 controls operation of the navigation system 1 by executing instructions stored in either ROM 11, RAM 12, mass storage device 13, or a combination of these devices. Mass storage device 13 stores a map database of streets and points of interest for a given geographic area. ROM 11 is non-volatile memory, a portion of which may be erasable and reprogrammable. For example, ROM 11 may include flash memory, electrically-erasable programmable ROM (EEPROM), or any other suitable form of programmable-erasable non-volatile memory. Mass storage device 13 may be embodied as a magnetic, optical, magneto-optical, or any other type of non-volatile storage device suitable for storing large quantities of data.

The navigation system 1 also includes a sensor subsystem 27. The sensor subsystem includes an angular velocity sensor (e.g., a gyroscope)19, a distance sensor (i.e., odometer) 20, a GPS receiver 21, and an FM receiver/decoder, each coupled to the bus system 24. Note that the GPS receiver 21 may be replaced by appropriate components for use with other types of precise positioning systems, such as LORAN-C, etc., or it may simply be omitted. Each of the sensors 19-22 may be coupled to the bus system 24 by appropriate interface circuitry, such as analog-to-digital converters and appropriate signal conditioning circuitry. The FM receiver/decoder receives and decodes the broadcast RTI messages and outputs data representing the RTI messages onto the bus system 24 in a format which can be used by the CPU 10 and stored in any of storage devices 11, 12, and 13. Data output by the angular velocity sensor 19, the distance sensor 20, and GPS receiver 21 are used by the navigation system 1 in conjunction with the street map database to compute the current location of the vehicle as the vehicle travels.

The navigation system 1 also includes an input/output (I/O) subsystem 26. The I/O subsystem 26 includes an input subsystem 14, an audio controller 15, and a display controller 17, each coupled to the bus system 24. The I/O subsystem 26 further includes an audio speaker 16 coupled to and controlled by audio controller 15 and a display device 18 coupled to and controlled by display controller 17. The input subsystem 14 includes various user-operable controls, such as buttons and/or switches, using which the driver can operate the navigation system 1, such as to enter a destination, select a display mode, etc. The navigation system 1 outputs digitized or synthesized audio navigation instructions to the user via the audio speaker 16. Visual output, which may include a map display and/or navigation instructions, is provided to the driver via the display device. The display device 18 may be a liquid crystal display (LCD), a cathode ray tube (CRT), or any other suitable form of display device.

Note that aspects of the present invention may be embodied in software, as will be apparent from this description. That is, aspects of the present invention may be carried out in a computer system, such as navigation system 1, in response to its CPU executing sequences of instructions contained in memory. The instructions may be executed from RAM, ROM, a mass storage device, or a combination of such devices. Also, in various embodiments of the present invention, hardwired circuitry may be used in place of, or in combination with, software instructions to implement the present invention. Thus, the present invention is not limited to any specific combination of hardware circuitry and software, nor to any particular source for the instructions executed by a computer system.

For some applications, it may be desirable to have an on-board navigation system with only basic functionality, to reduce the complexity and cost of the system. Accordingly, certain embodiments of the navigation system 1 may not include all of the above-mentioned components. For example, if a given application does not require the navigation system to output detailed navigation instructions, then the audio controller 15, speaker 16, display controller 17, and display device 18 may be replaced with simpler devices, such as a warning light and/or a simple a buzzer. Further, it may not be necessary to include a GPS receiver 24, as noted above.

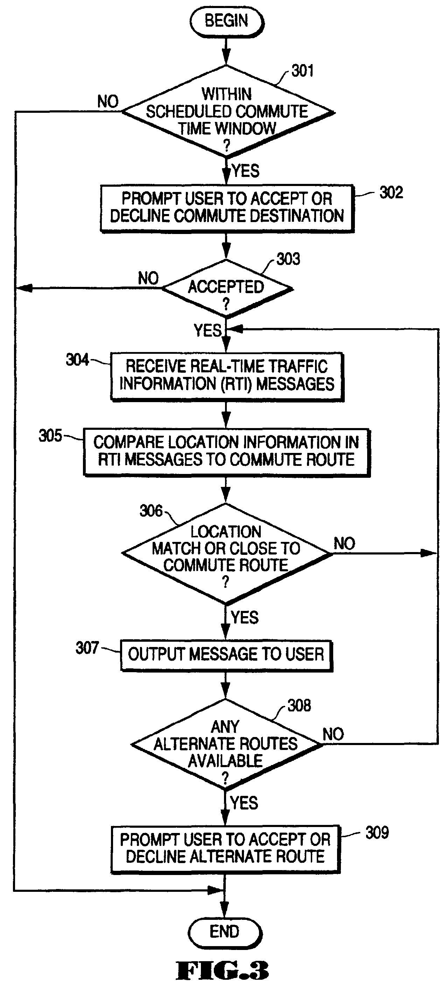

Figure 3 illustrates an overall routine by which the navigation system 1 can compare received RTI messages to a learned commute route and output a notification to the driver when there is a traffic problem on or near the commute route. In response to the navigation system being powered up (which may occur automatically whenever the automobile is started), at 301 the navigation system 1 determines whether the present time and day of the week are within a previously defined commute time window. The commute time window, which defines the typical commute times of the user, may be a default, or it may have been input previously by the user through a scheduling function of the navigation system 1. The commute time window may be, for example, one or more user-specified periods of time during user-specified days of the week. If the present day and time fall within the commute time window, then at 302 the system 1 prompts the user to accept or decline the commute destination; otherwise, the routine ends. The commute destination may be a location that has been determined automatically by the system 1 based on the learned commute route or previously input or selected by the user, and then stored in non-volatile memory. If the user accepts the commute destination at 303, then at 304 the navigation system 1 uses the commute destination as the currently selected destination and begins to receive and decode the RTI messages that have been transmitted from the remote source. If the user does not accept the commute destination, the routine ends.

Note that the use of the scheduled commute time window avoids the user's having to specify his commute destination and other parameters, such as guidance criteria, calculation criteria, etc., each day before beginning his commute. Instead, the user can activate commute guidance and recall previously stored user preferences with just the touch of a button by accepting the commute destination. Hence, very few user inputs are required to operate the system.

Upon receiving and decoding the RTI messages, at 305 location information relating to traffic problems and embedded in the RTI messages is compared by the navigation system to the learned commute route. Next, at 306 the system 1 determines whether the location information in the RTI messages matches or is close to (substantially matches) the commute route. If there is no match or substantial match, then the routine repeats from 304. If, however, there is a match or a substantial match, then at 307, the system outputs a notification message indicating to the driver that there is a problem on or close to the drivers commute route. This message may be in the form of text, graphics and/or audio, or, as indicated above, it may be a more simple audio or visual indication. Next, at 308, the navigation system 1 determines whether any alternate commute routes are available. Any suitable technique can be used for computing the best alternative route; note that the system 1 already knows the destination of the commute route and the present location of the vehicle. If no alternate route to the destination can be identified, then the routine repeats from 304. If an alternate route is identified, then the system 1 prompts the driver to accept or decline an alternate route at 309. Note that numerous variations on the above-described routine and the routines described below are possible.

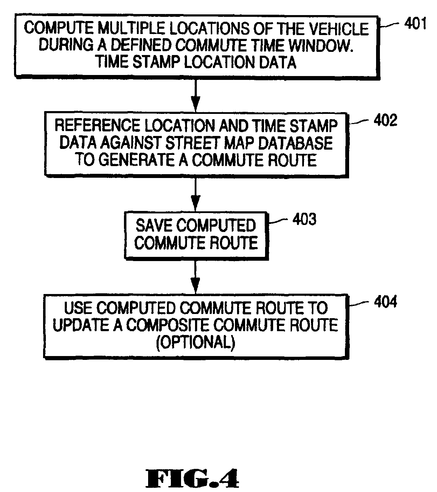

Various approaches can be used for computing a commute route in accordance with the present invention. For example, the navigation system 1 may apply a statistical analysis to the travel history of the automobile. Figure 4 illustrates a routine by which a commute route can be determined, according to one embodiment. At 401, when the navigation system 1 is operated within the previously specified (or default) commute time window, the system 1 computes the location of the vehicle at multiple locations as the vehicle travels, and associates time stamps with the data representing each computed location. Thus, the system 1 acquires data representing a chronology of the vehicles travels. This chronology data is stored in the navigation system 1 in an appropriate storage device, such as RAM 11 or mass storage device 13. Next, at 402, the stored location and time stamp data are referenced against the stored street map database to generate the commute route. Note that 402 may be performed in response to a power up of the navigation system 1 or in response to an impending power down. The commute route is then saved to the appropriate storage device at 403. At 404, (optionally) the commute route is used to update or modify a composite commute route that has been generated from position and time stamp data acquired on multiple days. It will be recognized that the more data that is acquired, the more accurate the composite commute route becomes.

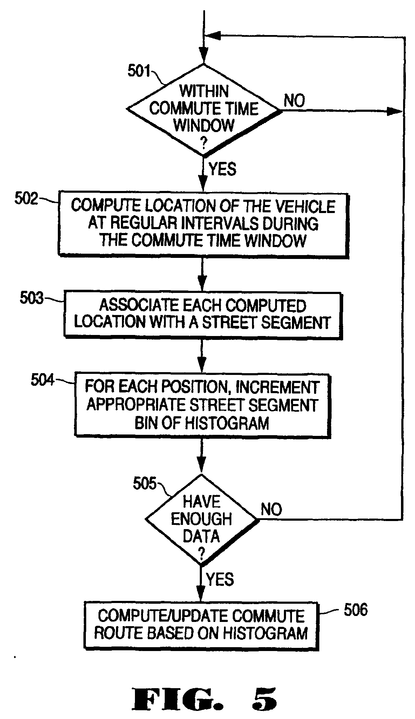

Figure 5 illustrates an alternative routine for determining a commute route. The routine of Figure 5 is based upon the generation of a histogram of data representing the travels of the vehicle. In particular, the system compiles a histogram consisting of a number of bins, each representing one street segment of the stored map database. In other embodiments, the histogram may be based upon information other than street segments, such as latitude and longitude, etc. Thus, at 501, the system 1 determines whether the present time falls within a previously-defined (or default) commute time window. Next, at 502, the current location of the vehicle is computed by the navigation system 1 at regular time intervals during the commute time window. Each computed location of the vehicle is associated with a street segment from the map database at 503. Accordingly, at 504 for each computed location of the vehicle, the appropriate street segment bin of the histogram is incremented by one. If enough data has been acquired to generate a statistically useful result at 505, then at 506 the system 1 computes a commute route (or updates a previously-computed commute route) based upon the histogram. If the amount of acquired data is not sufficient, then the routine repeats from 501.

Thus, an on-board automobile navigation system that provides traffic advisory information to a driver based on real-time traffic information and a learned commute route has been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A method of providing advisory information to a driver of a vehicle, the method comprising:
determining a route empirically based on historical travel data of the vehicle;
receiving real-time traffic information;
referencing the real-time traffic information against the route; and
outputting a notification to the driver if a correspondence is found between the real-time traffic information and the route.

2. A method according to claim 1, wherein the vehicle is an automobile, and wherein said determining comprises determining the route empirically based on historical travel data of the vehicle and a street map database.

3. A method according to claim 1, further comprising:
computing an alternate route if a correspondence is found between the real-time traffic information and the route; and
notifying the driver of the alternate route.

4. A method according to claim 1, wherein said determining comprises:
creating a histogram of travel information of the automobile; and
determining the route based on the histogram.

5. A method according to claim 1, wherein the real-time traffic information further comprises information relating to a traffic problem.

6. A method according to claim 1, further comprising:
determining whether a present time is within a previously defined time window;
if the present time is within the previously defined time window, outputting a prompt to accept or decline a previously defined destination; and
if the previously defined destination is accepted, designating the previously defined destination as a currently selected destination.

7. In an on-board navigation system for assisting a driver of an automobile in navigating, a method of providing advisory information to the driver, the method comprising:
acquiring information on a travel history of the automobile;
identifying a commute route based on the information on the travel history of the automobile and a street map database;
in response to a power-up of the navigation system, receiving real-time traffic information from a remote source, the real-time traffic information including location information;
comparing the location information with the commute route; and
outputting a notification to the driver if the location information substantially matches a location on the commute route.

8. A method according to claim 7, further comprising:
computing an alternate route if the location information substantially matches a location on the commute route; and
notifying the driver of the alternate route.

9. A method according to claim 7, wherein said acquiring comprises creating a histogram of locations at which the automobile has traveled, and wherein said identifying comprises identifying the commute route based on the histogram.

10. A method according to claim 7, wherein the real-time traffic information further comprises information relating to a traffic problem.

11. A method according to claim 7, further comprising, in response to the power-up of the navigation system:
determining whether a present time corresponds to a previously defined time window; and
if the present time corresponds to the previously defined time window, recalling a previously stored destination.

12. A method according to claim 11, further comprising using the previously defined destination as a currently selected destination.

13. An on-board navigation system for assisting the driver of an automobile in navigating, the system comprising:
means for storing a street map database;
means for automatically learning a commute route based on historical travel data of the vehicle and the street map database;
means for receiving real-time traffic information including location information;
means for referencing the location information against the commute route in response to a power-up of the navigation system; and
means for outputting a notification to the driver if the location information corresponds to a location on the commute route.

14. An on-board navigation system according to claim 13, further comprising:
means for computing art alternate route if the location information corresponds to a location on the commute route; and
means for notifying the driver of the alternate route.

15. An on-board navigation system according to claim 13, wherein the means for determining comprises:
means for creating a histogram of travel data of the automobile; and
means for determining the commute route based on the histogram.

16. An on-board navigation system according to claim 13, further comprising:
means for receiving user inputs specifying a desired destination;
means for computing a best route based on the street map database and the desired destination; and
means for outputting guidance information based on the best route.

17. An on-board navigation system according to claim 13, further comprising:
means for determining whether a present time is within a previously defined commute time window;
means for outputting a prompt to accept or decline a previously defined commute destination if the present time is within the previously defined commute time window; and
means for designating the previously defined commute destination as a currently selected destination if the previously defined commute destination is accepted.

18. A system for assisting a driver of an automobile in navigating, the system comprising:
a processor for controlling operation of the system;
an input subsystem coupled to the processor for receiving user inputs;
an output subsystem coupled to the processor for outputting guidance information;
a sensor subsystem coupled to the processor for measuring travel parameters of the automobile;
a storage device coupled to the processor and storing a street map database; and
a receiver coupled to the processor for receiving real-time traffic information over a wireless link;
wherein the processor is configured to:
determine a first route empirically based on travel data of the automobile and the street map database;
compare location information in the real-time traffic information with the first route; and
generate a notification for output to the driver if the location information corresponds to a location along the first route.

19. A system according to claim 18, wherein the processor is further configured to:
receive an input destination via the input subsystem;
compute a current position of the vehicle based on data from the sensor subsystem;
compute a second route based on the input destination, the map database, and the current position of the vehicle; and
generate the guidance information based on the second route;

20. A system according to claim 19, wherein the processor is further configured to:
compute an alternate route for the first route if the location information substantially matches a location along the first route; and
generate a notification for output to the driver of the alternate first route.

21. A system according to claim 19, wherein the processor is further configured to:
generate a histogram of travel information of the automobile; and
determine the first route based on the histogram.

22. A system according to claim 18, wherein the processor is further configured to:
determine whether a present time is within a previously defined time window;
output a prompt to accept or decline a previously stored destination if the present time is within the previously defined commute time window.

23. A system for assisting a driver of an automobile in navigating, the system comprising:
an input subsystem for receiving user inputs;
an output subsystem for outputting guidance information;
a sensor subsystem;
a storage device storing a street map database;
a receiver for receiving real-time traffic information over a wireless link; and
a processor coupled to the input subsystem, the output subsystem, the sensor subsystem, the storage device, and the receiver, the processor configured to:
compute a current position of the vehicle based on data from the sensor subsystem;
receive an input destination via the input subsystem;
compute a first route based on the input destination, the map database, and the current position of the vehicle;
generate the guidance information based on the first route;
determine a second route empirically based on travel data of the automobile;
compare location information in the real-time traffic information with the second route; and
generate a notification for output to the driver if the location information substantially matches a location along the second route.

24. A system according to claim 23, wherein the processor is further configured to:
compute an alternate second route if the location information substantially matches a location along the second route; and
generate a notification for output to the driver of the alternate second route.

25. A system according to claim 23, wherein the processor is further configured to:
generate a histogram of travel information of the automobile; and
determine the second route based on the histogram.

26. A system according to claim 23, wherein the processor is further configured to:
determine whether a present time is within a previously defined time window;
if the present time is within the previously defined commute time window, designate the previously defined commute destination as a currently selected destination.
